# EUROPÄISCHE PATENTANMELDUNG

(11) **EP 0 937 559 A2**
(43) Veröffentlichungstag der Anmeldung: **25.08.1999**
(21) Anmeldenummer: 99103168.3
(22) Anmeldetag: 18.02.1999
(51) Int. Cl.: B29B 9/16, B29B 13/10, B29K 23/00

(54) **Verfahren und Vorrichtung zum Herstellen von eingefärbtem Kunststoffpulver**

(30) Priorität: 20.02.1998 DE 19807261
(71) Anmelder: Köver GmbH & Co. Kunststoff-Technik KG, 21614 Buxtehude (DE)
(72) Erfinder: Wutz, Herbert Dipl.-Ing., 65439 Flörsheim (DE)
(74) Vertreter: Grättinger & Partner (GbR)

(57) **Zusammenfassung**

Verfahren zum Herstellen von eingefärbtem Kunststoffpulver aus Kunststoffgranulat und Farbmittel, insbesondere von schwarz eingefärbtem PE-Pulver aus PE-Granulat und Ruß durch Zugabe einer Mischung aus Kunststoffgranulat und Farbmittel an eine Feinmahlmühle.

## Beschreibung

Die Erfindung betrifft ein Verfahren und eine Vorrichtung zum Herstellen von eingefärbtem Kunststoffpulver aus Kunststoffgranulat und Farbmittel, insbesondere von schwarz eingefärbtem PE-Pulver aus PE-Granulat und Ruß.

Außerdem betrifft die Erfindung eine neuartige Verwendung einer Feinmahlmühle in Form einer Zahnscheibenmühle.

Es gibt zahlreiche Anwendungen für Kunststoff in Pulverform, z.B. beim Rotationsformen, bei der Teppichbeschichtung, beim Wirbelsintern, bei der Herstellung von Druckfarben oder Pulverlacken. Dabei werden die Kunststoffe vielfach nicht in ihren natürlichen Farben, sondern als eingefärbtes Kunststoffpulver verarbeitet. Bekannte Verfahren zur Herstellung von eingefärbtem Kunststoffpulver sind das Compoundieren des Kunststoffgranulats mit dem Farbmittel im Extruder und anschließendem Vermahlen zu Pulver in einer Feinmahlmühle oder das Dryblenden von naturfarbenem Kunststoffpulver im Intensivmischer mit dem Farbmittel. In beiden Fällen sind zwei aufwendige Arbeitsgänge, einer zum Mahlen, ein weiterer zum Färben erforderlich. Um eine genügend feste Anlagerung des Farbstoffs an das Polyethylenpulver zu erzielen, muß die Färbetemperatur genügend hoch sein. Andernfalls besteht beim Aufschmelzen des Polymers zu seiner Weiterverarbeitung, z.B. nach dem Rotationssinterverfahren, die Gefahr einer Phasentrennung. Dabei kann sich Farbstoff z.B. in Form von Ruß an der Oberfläche des gesinterten Teils abscheiden.

Beim Anfassen derartiger Teile färben sich die Hände; handelt es sich beispielsweise um Behälter, welche im Rotationssinterverfahren hergestellt werden, so kommt es zu ungewolltem Einfärben des Füllguts bzw. bei Ruß als Farbstoff zu einem höchst unerwünschten Verschmutzen des Füllguts.

Demgegenüber liegt der vorliegenden Erfindung die Aufgabe zugrunde, den Aufwand bei der Herstellung von eingefärbtem PE-Pulver aus PE-Granulat und Farbmittel zu reduzieren, d.h. die Möglichkeit zu schaffen, eingefärbte Kunststoffpulver mit deutlich niedrigeren Kosten herzustellen. Ein neuartiges Verfahren soll sich zum Einfärben von Kunststoffen jeglicher Art, vor allem aber von Polyethylen mit geeigneten Farbstoffen, Pigmenten oder anderen Farbmitteln wie Ruß eignen.

Diese Aufgabe wird im Sinne der anliegenden Patentansprüche, insbesondere deren von anderen Ansprüchen unabhängigen Patentansprüchen gelöst, wobei es sich um einen Verfahrens-, einen Vorrichtungs- und einen Verwendunganspruch handelt.

Diesen Ansprüchen liegt die gemeinsame Überlegung zugrunde, eine gesonderte Färbeeinrichtung bzw. einen gesonderten Färbeschritt entbehrlich zu machen und stattdessen den Verfahrensschritt des Feinmahlens zu Pulver und des Einfärbens des Pulvers in einer Arbeitsstation, nämlich der Feinmahlmühle zusammenzufassen, indem die dort auftretenden hohen Temperaturen gleichzeitig für die Anlagerung des Farbstoffs an das PE-Pulver genutzt werden. Dies gelingt besonders vorteilhaft in einer zum Pulverisieren von PE-Granulat üblicherweise verwendeten Zahnscheibenmühle, wo sich im Mahlspalt Temperaturen zwischen 78° und 82° C einstellen. Bei diesen Temperaturen ergibt sich eine feste Anlagerung der Farbstoffe an das PE-Pulver. Eine bevorzugte Anwendung ist das Schwarzfärben von PE-Pulver mittels Ruß, z.B. in Form von Gasruß, Furnace-Ruß oder Flammruß, bevorzugt in Perlform wegen der damit verbundenen geringeren Verschmutzung der Herstellungsanlage und der Mahlräume. Vorteilhaft wird beim Anfahren der Feinmahlmühle auf jegliche Kühlung verzichtet, um die genannten Betriebstemperaturen möglichst rasch zu erreichen.

Im Rahmen der erfindungsgemäßen Vorrichtung wird naturfarbenes PE-Granulat aus einem Lager- bzw. Transportbehälter, z.B. Siloanlage, Bigbag, Oktabin usw. von einem Saugfördergerät in einen Vorratsbehälter der Feinmahlanlage gefördert. Dieser Behälter ist mit Füllstandsmeßgeräten ausgerüstet, welche das Fördergerät automatisch ein- und ausschalten. Am Auslauf des Vorratsbehälters, beispielsweise mit einem Fassungsvermögen von 3 bis 5 Tonnen befindet sich ein mit Preßluft gesteuerter Schieber, durch den das PE-Granulat in einen kleinen Vorratstrichter von nur 20 bis 50 Litern Rauminhalt einer Dosierrinne fließt. Über die Dosierrinne wird das Granulat einer Pulvermühle zugeführt. In dieselbe Dosierrinne fördert ein Schneckendosiergerät zum Austragen der entsprechenden Rußmenge, welche in der Regel nicht unter 0,5 Gewichtsprozenten bezogen auf die Granulatmenge liegen soll, da sonst im fertigen Formteil der notwendige UV-Schutz nicht gegeben ist. Beim Schwarzfärben von PE-Pulver hat sich in einer Versuchsreihe Flammruß 101 als besonders geeignet herausgestellt, wegen seiner niedrigen Beschaffungskosten und weil er eine besonders intensive Anlagerung an das PE-Pulver ergibt.

Als Feinmahlmühle kommt bevorzugt eine Zahnscheibenmühle in Frage, in deren Mühlengehäuse sich eine Riffelscheibe als Stator und eine von einem Motor angetriebene Riffelscheibe als Rotor befindet. Der Abstand der beiden Riffelscheiben, d.h. der Mahlspalt kann entsprechend der gewünschten Korngröße mechanisch eingestellt werden. Derartige Mühlen werden üblicherweise mit Wasser bzw. Preßluft sowie durch die Luftführung des Absaugventilators gekühlt. Das feingemahlene und eingefärbte Pulver fällt in der Mühle nach unten und wird vom Absaugventilator zu einem Zyklon gefördert. Unter dem Zyklon befindet sich vorteilhaft eine Zellradschleuse, welche das gefärbte Pulver auf ein Rüttelsieb dosiert. Je nach Maschenweite des Siebes, welche in Abstimmung mit dem Mahlspalt der Mühle gewählt wird, ergibt sich eine bestimmte Menge an Überkorn, die im freien Fall wieder der Mühle zugeführt wird. Das Feinkorn läuft in einen Zwischenbehälter und kann von dort als eingefärbtes Pulver für die Weiterverarbeitung abgefüllt werden. Bei Anwendung des erfindungsgemäßen Verfahrens lassen sich bei der Herstellung von schwarzem PE-Pulver Einsparungen zwischen 0,20 und 0,50 DM/kg PE-Pulver erzielen, wie Vergleichsrechnungen mit entsprechenden Rohstoffpreisen ergeben haben. Bei entsprechendem Einsatz von Steuerungs- und Kontrollmeßgeräten wie Thermostaten und Füllstandsmeßgeräten ist ein Betrieb praktisch ohne Überwachungspersonal möglich.

Im folgenden wird ein Ausführungsbeispiel der Erfindung anhand einer schematischen Darstellung einer Anlage zum Herstellen von eingefärbtem Kunststoffpulver erläutert.

Kunststoffgranulat befindet sich in einem Vorratsbehälter 1, von wo es in einen Vorratstrichter 2 gelangt, in welchen auch der Farbzusatz aus einem Lagerbehälter 3 zugeführt wird. Als Kunststoffgranulat kommt bevorzugt ein PE-Granulat der Sorte LLPDE (lineares Polyethylen niedriger Dichte), als Farbmittel Flammruß 101 in Perlform in Frage. Die Mischung aus den beiden Bestandteilen gelangt über eine Dosierrinne 4 zwischen die Riffelscheiben einer Zahnscheibenmühle 5, in welcher die PE-/Ruß-Mischung bei einer Temperatur von 78° bis 82° C fein gemahlen wird. Dabei kommt es zum festen Anlagern des Russes an das PE-Pulver, welches über eine Saugleitung 6 aus der Zahnscheibenmühle 5 in einen Zyklon 7 gefördert wird. Am Ausgang des Zyklons 7 gefindet sich eine Zellradschleuse 8 als Dosiervorrichtung, welche das eingefärbte frisch gemahlene PE-Pulver auf ein Rüttelsieb 9 dosiert, durch welches die Feinkornfraktion über eine Leitung 10 in einen Feinkornzwischenbehälter 11 läuft. Aus diesem Zwischenbehälter 11 kann das eingefärbte Pulver über eine Abfüllleitung 12 für die Weiterverarbeitung in einen entsprechenden Transportbehälter 13 abgefüllt werden. Über eine weitere Leitungsverbindung 14 gelangt Überkorn aus dem Rüttelsieb 9 direkt im freien Fall zurück in die Zahnscheibenmühle 5.

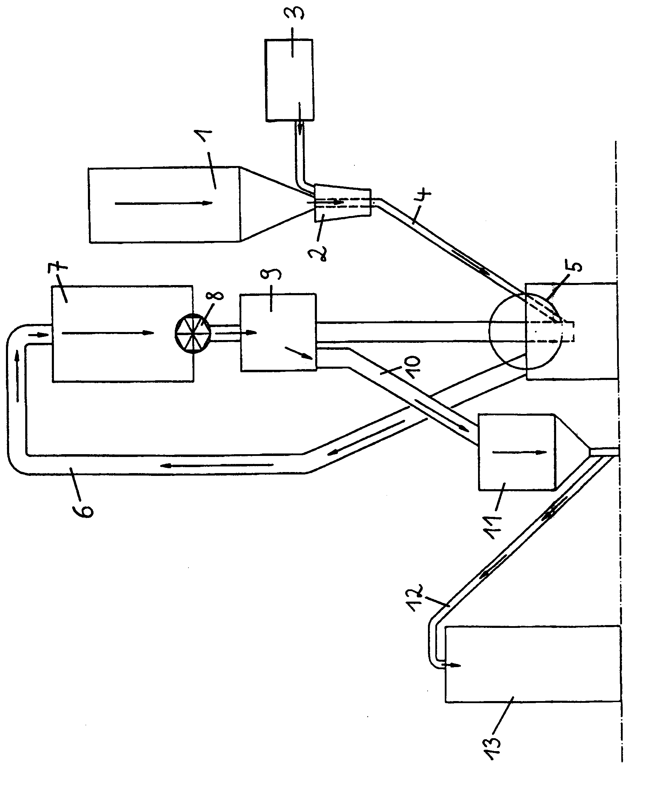

## Patentansprüche

1. Verfahren zum Herstellen von eingefärbtem Kunststoffpulver aus Kunststoffgranulat und Farbmittel, insbesondere von schwarz eingefärbtem PE-Pulver aus PE-Granulat und Ruß
durch Zugabe einer Mischung aus Kunststoffgranulat und Farbmittel an eine Feinmahlmühle (5).

2. Verfahren nach Anspruch 1,
dadurch gekennzeichnet,
daß die Mischung der Feinmahlmühle (5) mit dosierten Mengenanteilen an Granulat und Ruß zugeführt wird,
wobei der Rußanteil zwischen 0,2 und 2,0 Gewichtsprozenten, bezogen auf die Granulatmenge beträgt.

3. Verfahren nach Anspruch 1,
dadurch gekennzeichnet,
daß die Mischung in der Feinmahlmühle (5) eine Mahltemperatur von 75° - 85° C annimmt.

4. Verfahren nach Anspruch 3,
dadurch gekennzeichnet,
daß die Mahltemperatur zwischen 78° und 82° C beträgt.

5. Verfahren nach Anspruch 1,
dadurch gekennzeichnet,
daß das in der Feinmahlmühle (5) erzeugte eingefärbte Pulver aus der Feinmahlmühle über eine Saugleitung (6) in einen Zyklon (7) und von dort auf ein Rüttelsieb (9) gefördert wird, dessen Feinkorn in einen Zwischenbehälter (11) geleitet wird, aus dem die gewünschten Pulvermengen abgefüllt werden.

6. Verfahren nach Anspruch 5,
dadurch gekennzeichnet,
daß das auf dem Rüttelsieb (9) anfallende Überkorn wieder der Feinmahlmühle (5) zugeführt wird.

7. Verfahren nach Anspruch 1,
dadurch gekennzeichnet,
daß die Mischung aus PE-Granulat der Sorte LLDPE und Flammruß 101 gebildet wird.

8. Verfahren nach Anspruch 7,
dadurch gekennzeichnet,
daß Flammruß 101 in Perlform eingesetzt wird.

9. Vorrichtung zum Herstellen von eingefärbtem Kunststoffpulver aus Kunststoffgranulat und Farbmittel, insbesondere nach einem Verfahren gemäß Anspruch 1,
dadurch gekennzeichnet,
daß sie eine Feinmahlmühle (5) umfaßt, in welcher das Granulat mechanisch zerkleinert und das Farbmittel an das frisch gemahlene PE-Pulver reibfest angelagert wird.

10. Vorrichtung nach Anspruch 9,
dadurch gekennzeichnet,
daß als Feinmahlmühle (5) eine Zahnscheibenmühle mit zwei Riffelscheiben, die zwischen sich einen verstellbaren Mühlspalt bilden, vorgesehen ist.

11. Vorrichtung nach Anspruch 10,
dadurch gekennzeichnet,
daß der Zahnscheibenmühle ein Zyklon (7) mit ausgangsseitiger Dosiervorrichtung nachgeschaltet ist, welche das frisch gemahlene und eingefärbte Pulver auf ein Rüttelsieb (9) dosiert.

12. Vorrichtung nach Anspruch 11,
dadurch gekennzeichnet,
daß als Dosiervorrichtung eine Zellradschleuse (8) vorgesehen ist.

13. Vorrichtung nach Anspruch 9,
dadurch gekennzeichnet,
daß vor der Feinmahlmühle (5) PE-Granulat aus einem Vorratsbehälter (1) in einem nachgeschalteten Vorratstrichter (2) mit dem Farbmittel vermischt wird
und daß die Mischung über eine Dosierrinne (4) der Feinmahlmühle (5) zugeführt wird.

14. Verwendung einer Zahnscheibenmühle mit einer Riffelscheibe als Stator und einer weiteren Riffelscheibe als Rotor zum Feinmahlen und Färben von PE-Granulat, wenn zusammen mit diesem ein Farbmittel in den Mahlspalt zwischen den Riffelscheiben eingebracht wird.
